# EUROPEAN PATENT APPLICATION

(11) **EP 4 428 995 A2**
(43) Date of publication of application: **11.09.2024**
(21) Application number: 24159485.2
(22) Date of filing: 23.02.2024
(51) Int. Cl.: H01M 50/107, H01M 50/342, H01M 50/545, H01M 50/548, H01M 50/559, H01M 50/566, H01M 50/567

(54) **SECONDARY BATTERY**

(30) Priority: 09.03.2023 KR 20230030974
(71) Applicant: Samsung SDI Co., Ltd., Yongin-si, Gyeonggi-do 17084 (KR)
(72) Inventor: CHUN, Kwan Sic, 17084 Yongin-si (KR)
(74) Representative: Marks & Clerk LLP

(57) **Abstract**

A secondary battery including an electrode assembly including a first electrode plate, a separator, and a second electrode plate; a case accommodating the electrode assembly; a rivet terminal that penetrates the case and is electrically connected to the first electrode plate of the electrode assembly; and a vent plate that seals the case and is directly electrically connected to the second electrode plate of the electrode assembly.

## Description

### BACKGROUND

### 1. Field

The present disclosure relates to a secondary battery.

### 2. Description of the Related Art

A secondary battery is a power storage system that provides excellent energy density capable of converting electrical energy into chemical energy and storing the same. Compared to non-rechargeable primary batteries, secondary batteries are rechargeable and are widely used in IT devices such as smart phones, cellular phones, notebooks, and tablet PCs. Recently, interest in electric vehicles has increased to prevent environmental pollution, and accordingly, high-capacity secondary batteries are being adopted for electric vehicles. These secondary batteries are required to have characteristics such as high density, high power, and stability.

The above information disclosed in this Background section is only for enhancement of understanding of the background of the invention and therefore it may contain information that does not constitute prior art.

### SUMMARY

The present disclosure provides a cylindrical secondary battery capable of achieving high capacity according to an increased internal space of a case by integrating a current collector (or current collector plate) and a vent plate, and also achieving low costs by reducing material costs and processing costs.

The present disclosure provides a secondary battery having improved weldability between an electrode assembly and a vent plate by welding the electrode assembly and the vent plate to each other by using laser beams for electrical/mechanical coupling, and by including, on the vent plate, a welding line from a winding-leading end to a winding-terminating end of the electrode assembly, and a welding line from the winding-terminating end to the winding-leading end of the electrode assembly.

The present disclosure provides a secondary battery having improved sealing capacity of a case by coupling the case to a vent plate in a mechanical coupling structure. The mechanical coupling structure may utilize a crimping method, a curling method, and/or a welding method.

A secondary battery according to the present disclosure includes: an electrode assembly including a first electrode plate, a separator, and a second electrode plate; a case accommodating the electrode assembly; a rivet terminal penetrating the case and electrically connected to the first electrode plate of the electrode assembly; and a vent plate sealing the case and directly electrically connected to the second electrode plate of the electrode assembly.

In some embodiments, the vent plate may further include a number (e.g. plurality) of welding lines directly electrically connecting the vent plate to the second electrode plate.

In some embodiments, the welding lines may include at least one first welding line welded from a center to a circumference of the vent plate and at least one second welding line welded from the circumference to the center of the vent plate.

In some embodiments, the welding lines may radially extend from the center to the circumference of the vent plate.

In some embodiments, the welding lines may be provided by a laser beam.

In some embodiments, the vent plate may further include a number (e.g. plurality) of vent grooves.

In some embodiments, the vent grooves may include a number of linear first vent grooves radially extending from the center to the circumference of the vent plate.

In some embodiments, the vent grooves may include an inner circular second vent groove closer to the center than to the circumference and forming a concentric circle with the center of the vent plate, and an outer circular second vent groove closer to the circumference than to the center and forming a concentric circle with the center of the vent plate.

In some embodiments, the welding lines may be between the inner circular second vent groove and the outer circular second vent groove.

In some embodiments, the case and the vent plate may be coupled to each other by a seaming part in the case and the vent plate.

In some embodiments, the case and the vent plate may be coupled to each other by welding lines in the case and the vent plate.

In some embodiments, the vent grooves may include a number of linear first vent grooves radially extending from the center to the circumference of the vent plate, an inner circular second vent groove closer to the center than to the circumference and forming a concentric circle with the center of the vent plate, and an outer circular second vent groove closer to the circumference than to the center and forming a concentric circle with the center of the vent plate, and the welding lines may be between the inner circular second vent groove and the outer circular second vent groove.

In some embodiments, the linear first vent grooves may intersect the inner circular second vent groove and the outer circular second vent groove.

In some embodiments, the vent plate may include a first flat part coupled to the case, an inclined part inclined toward the electrode assembly from the first flat part, and a second flat part extending flatly from the inclined part toward the center of the vent plate.

In some embodiments, the second flat part of the vent plate may further include a number (e.g. plurality) of welding lines to directly electrically connect the vent plate to the second electrode plate.

In some embodiments, the vent plate may further include a concave part that is concave toward the electrode assembly at a center of the second flat part.

In some embodiments, the case and the vent plate may be coupled to each other by a crimping part in the case.

In some examples, the case and the vent plate may be coupled to each other by a crimping part and a beading part in the case.

In some embodiments, the case and the vent plate may be coupled to each other by a curling part in the case.

In some embodiments, the battery may include a current collector plate between the electrode assembly and the case and including a terminal connector part to which the rivet terminal is connected, an electrode plate connector part to which the first electrode plate is connected, and a fuse part between the terminal connector part and the electrode plate connector part.

In some embodiments, the fuse part may include: a fuse hole provided along a portion of an outer periphery of the terminal connector part; and a connection part electrically connecting the terminal connector part and the electrode plate connector part.

In some embodiments, the rivet terminal may include a head positioned outside the case and a fastening part extending from a center of the head to the inside of the case and welded to the terminal connector part.

At least some of the above and other features of the invention are set out in the claims.

### BRIEF DESCRIPTION OF DRAWINGS

FIG. 1 is a perspective view illustrating a cylindrical secondary battery according to one embodiment of the present disclosure.
FIG. 2 is a cross-sectional view of the cylindrical secondary battery shown in FIG. 1.
FIG. 3A is a perspective view illustrating a vent plate in the cylindrical secondary battery shown in FIG. 1, and FIGS. 3B and 3C are enlarged plan views illustrating welding lines according to welding directions.
FIG. 4A is a partial cross-sectional view illustrating a coupling structure between a vent plate and a case by crimping, in a cylindrical secondary battery according to one embodiment of the present disclosure, and FIG. 4B is a cross-sectional view illustrating an enlarged partial area of FIG. 4A.
FIG. 5 is a partial cross-sectional view illustrating a coupling structure between a vent plate and a case by curling, in a cylindrical secondary battery according to one embodiment of the present disclosure.
FIG. 6 is a partial cross-sectional view illustrating a coupling structure between a vent plate and a case by seaming, in a cylindrical secondary battery according to one embodiment of the present disclosure.
FIG. 7 is a partial cross-sectional view illustrating a coupling structure between a vent plate and a case by welding, in a cylindrical secondary battery according to the present disclosure.
FIG. 8 is a plan view illustrating a positive current collector in a cylindrical secondary battery according to one embodiment of the present disclosure.

### DETAILED DESCRIPTION

Hereinafter, preferred embodiments of the present disclosure will be described in detail with reference to the accompanying drawings.

Examples of the present disclosure are provided to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) referring to the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Preferred embodiments of the present disclosure will now be described in detail with reference to the accompanying drawings to the extent that a person skilled in the art to which the present disclosure belongs can easily implement the present disclosure.

Here, the same reference numerals are attached to parts having similar configurations and operations throughout the specification. In addition, when a part is said to be electrically coupled to another part, this includes not only a case where it is directly connected but also a case where it is connected with another element interposed therebetween.

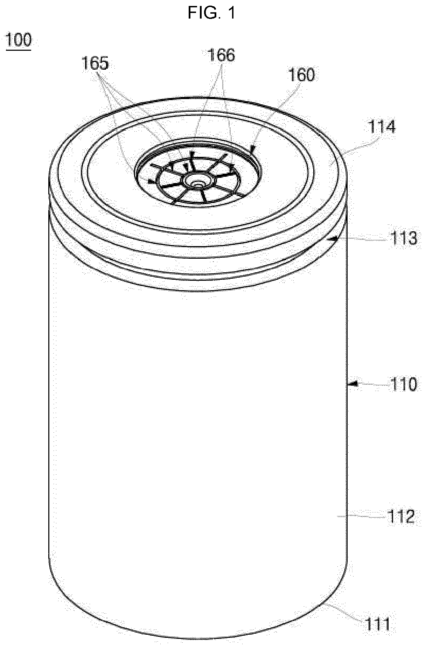

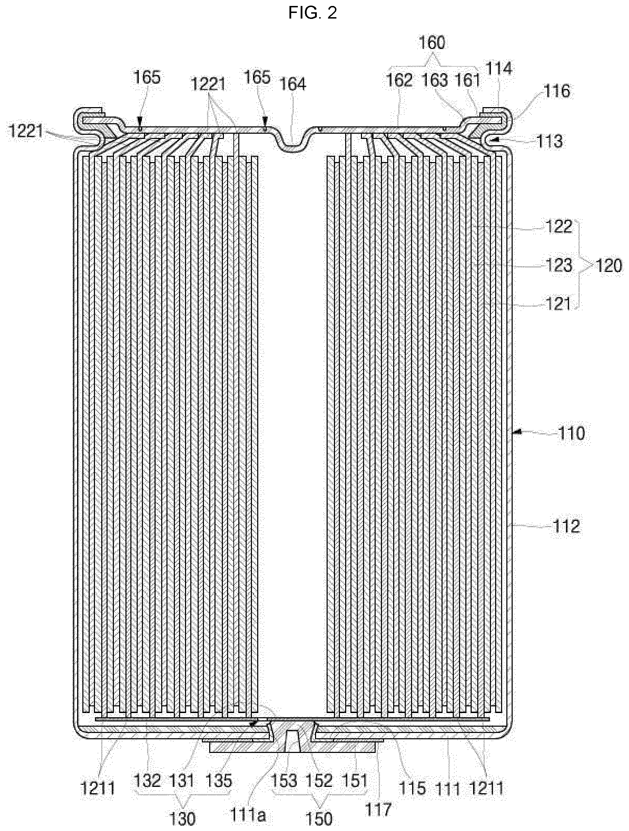

FIG. 1 is a perspective view illustrating a cylindrical secondary battery 100 according to one embodiment of the present disclosure, and FIG. 2 is a cross-sectional view of the cylindrical secondary battery 100 shown in FIG. 1.

Referring to FIGS. 1 and 2, the cylindrical secondary battery 100 according to one embodiment of the present disclosure may include a case 110, an electrode assembly 120, a positive electrode current collector plate 130, a rivet terminal 150, and a vent plate 160.

The case 110 may include a circular bottom portion 111 and a side surface portion 112 extending upward from an edge (e.g., a circumference) of the bottom portion 111. The bottom portion 111 and the side surface portion 112 of the case 110 may be integral with each other. In some embodiments, the case 110 may include or be referred to as a can, housing, or casing. In some embodiments, the case 110 may be provided by pressing a sheet material. For example, the case 110 having a seamless bottom portion and a side surface portion may be manufactured by pressing the sheet material with a punch after the sheet material is placed on a deep drawing die. In some embodiments, a non-ferrous metal billet is put into an extruder and extruded to provide a pipe having a seamless side surface portion, and then the bottom portion is welded to one side of the pipe to manufacture the case 110.

In some embodiments, the bottom portion 111 has a flat circular plate shape and may include a terminal hole 111a penetrating the center. The rivet terminal 150 may be inserted into the terminal hole 111a of the bottom portion 111. A first gasket 115 for sealing and electrical insulation may be between the terminal hole 111a and the rivet terminal 150. The first gasket 115 may be inserted into the terminal hole 111a and may extend to a lower portion of the bottom portion 111. The first gasket 115 may block contact between the rivet terminal 150 and the case 110, thereby electrically separating the rivet terminal 150 and the case 110. The terminal hole 111a of the bottom portion 111 of the case 110 may be sealed by the first gasket 115. The first gasket 115 may be made of a resin material such as polyethylene (PE), polypropylene (PP), or polyethylene terephthalate (PET).

An upper portion of the case 110 of the cylindrical secondary battery 100 may be open or opened during a manufacturing process. Therefore, the electrode assembly 120 of the cylindrical secondary battery 100 may be inserted through the opened upper portion of the case 110 during the manufacturing process. After the electrode assembly 120 and the electrolyte (optional) are inserted into the case 110, the vent plate 160 is coupled to the opened upper portion of the case 110, and thus, the case 110 can be sealed. In some examples, the electrolyte serves to enable the movement of lithium ions between the first electrode plate 121 and the second electrode plate 122 constituting the electrode assembly 120. The electrolyte may be a non-aqueous organic electrolyte solution that is a mixture of a lithium salt and a high-purity organic solvent. In addition, the electrolyte may be a polymer using a polymer electrolyte or a solid electrolyte.

In some examples, the case 110 may include steel, a steel alloy, aluminium, an aluminium alloy, nickel, or a nickel alloy. In addition, the case 110 may further include a beading part 113 (optional) recessed into the lower portion of the vent plate 160 and a crimping part 114 bent inward on the upper portion of the vent plate 160, so as to prevent the electrode assembly 120 from escaping to the outside. The beading part 113 and the crimping part 114 may prevent the vent plate 160 from being separated from the case 110.

The electrode assembly 120 includes a first electrode plate 121, a second electrode plate 122, and a separator 123. The electrode assembly 120 may include or be referred to as an electrode group or a jelly roll. The first electrode plate 121 may be a positive electrode plate (or cathode plate), and the second electrode plate 122 may be a negative electrode plate (or anode plate). In one or more embodiments, the first electrode plate 121 may be a negative electrode plate (or anode plate), and the second electrode plate 122 may be a positive electrode plate (or cathode plate). In general, an anode and a cathode are interpreted as a positive electrode (+) and a negative electrode (-), respectively. However, in the field of batteries, this is reversed, and an anode and a cathode are referred to as a negative electrode (-) and a positive electrode (+), respectively.

Hereinafter, for convenience of description, the first electrode plate 121 will be referred to as a positive electrode plate and the second electrode plate 122 will be referred to as a negative electrode plate.

The positive electrode plate 121 is provided by applying a positive electrode active material such as a transition metal oxide to a positive electrode current collector formed of a metal foil such as aluminium (Al), and may include a positive electrode uncoated portion (or positive electrode substrate tab) 1211, which is a region to which the positive electrode active material is not applied. In some embodiments, the positive electrode uncoated portion 1211 may protrude downward from the electrode assembly 120. In some embodiments, the positive electrode uncoated portion 1211 of the positive electrode plate 121 may protrude more downward (i.e., further downward) than the negative electrode plate 122 and the separator 123.

The negative electrode plate 122 is provided by applying a negative electrode active material such as graphite or carbon to a negative electrode current collector formed of a metal foil such as copper (Cu) or nickel (Ni), and may include a negative electrode uncoated portion (or negative electrode substrate tab) 1221, which is a region to which the negative electrode active material is not applied. In some embodiments, the negative electrode uncoated portion 1221 may protrude upward from the electrode assembly 120. In some embodiments, the negative electrode uncoated portion 1221 of the negative electrode plate 122 may protrude more upward (i.e., further upward) than the positive electrode plate 121 and the separator 123.

The separator 123 may be polyethylene (PE) or polypropylene (PP), but the present disclosure is not limited thereto. The separator may prevent an electrical short between the positive electrode plate 121 and the negative electrode plate 122 and enable only the movement of lithium ions therebetween.

After the positive electrode plate 121, the negative electrode plate 122, and the separator 123 are stacked, the electrode assembly 120 may be wound from the winding end into a substantially cylindrical shape. In some embodiments, the part where winding starts in the electrode assembly may be referred to as a winding-leading end, and the part where winding is completed may be referred to as a winding-terminating end.

In some embodiments, in the electrode assembly 120, the positive electrode uncoated portion 1211, to which the positive electrode active material is not applied, may protrude downward from the positive electrode plate 121, and the negative electrode uncoated portion 1221, to which the negative electrode active material is not applied, may protrude upward from the negative electrode plate 122.

The positive electrode current collector plate 130 may be a circular metal plate shaped to correspond to the lower surface of the electrode assembly 120. The area (or size) of the positive electrode current collector plate 130 may be equal to (or substantially equal to) or smaller than the area (or size) of the upper surface of the electrode assembly 120. The positive electrode current collector plate 130 may be made of aluminium (Al). The positive electrode current collector plate 130 may be fixed and electrically connected to the positive electrode plate 121 exposed to the lower portion of the electrode assembly 120 by welding in a configuration in which the upper surface of the positive electrode current collector plate 130 is in contact with the lower surface of the electrode assembly 120. The positive electrode current collector plate 130 may be fixed and electrically connected to the rivet terminal 150 by welding in a configuration in which the lower surface of the positive electrode current collector plate 130 is in contact with the upper surface of the rivet terminal 150. The positive electrode current collector plate 130 serves as a passage for current flow between the positive electrode plate 121 of the electrode assembly 120 and the rivet terminal 150.

The rivet terminal 150 may be inserted into the terminal hole 111a provided in the bottom portion 111 of the case 110 and electrically connected to the positive electrode current collector plate 130. That is, the rivet terminal 150 may be a positive electrode terminal. In one or more embodiments, the rivet terminal 150 and the case 110 may have different polarities. The rivet terminal 150 may be made of the same or similar material as the positive electrode current collector plate 130 and the positive electrode plate 121. In the rivet terminal 150, the diameter of the portion exposed to the lower part (or portion) of the case 110 and the diameter located inside the case 110 may be larger than the diameter located in the terminal hole 111a.

The rivet terminal 150 may include a head 151 exposed to a lower portion of the case 110 and a fastening part 152 positioned inside the case 110 and coupled to the positive electrode current collector plate 130. The rivet terminal 150 may be inwardly coupled to the terminal hole 111a of the case 110 from the outside. In one or more embodiments, the head 151 may be located outside the case 110. In addition, the fastening part 152 may be compressively deformed (compression-molded) by riveting and compressing in a configuration in which the first gasket 115 is on the bottom portion 111. In one or more embodiments, the fastening part 152 may have a diameter gradually increasing from the terminal hole 111a toward the inside of the case 110. In other words, the diameter of the upper end of the fastening part 152 may be larger than the diameter of the lower end of the fastening part 152. The lower end of the fastening part 152 may refer to a part connected to the head 151. The diameter of the upper end of the fastening part 152 is greater than the diameter of the terminal hole 111a, and the diameter of the terminal hole 111a may be greater than the diameter of the lower end of the fastening part 152. In addition, the head 151 may be in close contact with the lower portion of the bottom portion 111 in a configuration in which the first gasket 115 is therebetween. In one or more embodiments, the first gasket 115 may be between the rivet terminal 150 and the terminal hole 111a. The rivet terminal 150 may be electrically connected to the positive electrode plate 121 of the electrode assembly 120 through the positive electrode current collector plate 130.

In addition, an insulating member 117 may be between the head 151 and the bottom portion 111 of the case 110. That is, the head 151 is located below the bottom portion 111, and the insulating member 117 that blocks electrical contact between the rivet terminal 150 and the case 110 may be in a region where the head 151 and the bottom portion 111 overlap each other in a plan view. A diameter of the insulating member 117 may be greater than a diameter of the head 151. Thus, the outer periphery (or end) of the insulating member 117 may extend to the outside of the head 151 to then be exposed.

The first gasket 115 is between the fastening part 152 and the terminal hole 111a of the case 110, and a lower end thereof may extend between the head 151 and the bottom part 111 of the case 110. In one or more embodiments, the end of the lower end of the first gasket 115 may come into contact with the insulating member 117. That is, the first gasket 115 and the insulating member 117 may be between the rivet terminal 150 and the bottom portion 111 of the case 110 to electrically insulate the rivet terminal 150 from the case 110, followed by sealing. In one or more embodiments, the first gasket 115 and the insulating member 117 may be integrally formed (i.e., integral).

The rivet terminal 150 may further include a welding groove 153 having a predetermined depth from the bottom of the head 151 toward the fastening part 152. That is, the welding groove 153 may pass through the center of the head 151 and be provided from the bottom to the top of the fastening part 152. Since the thickness of the fastening part 152 is reduced by the welding groove 153, welding between the fastening terminal 150 and the positive electrode current collector plate 130 may be easily performed from the outside of the case 110.

In some examples, the rivet terminal 150 may not include the welding groove 153. In such an embodiment, the thickness of the fastening part 152 may have a greater thickness than the head 151.

The vent plate 160 is a circular metal plate and, as described above, may be coupled to the case 110 by the beading part 114 and the crimping part 115. In some embodiments, the upper surface of the vent plate 160 may be directly exposed to the outside. In some embodiments, the vent plate 160 may include or be referred to as a terminal (e.g., a negative electrode terminal), a cap, or a sealing plate. The vent plate 160 may be made of the same or similar material as the case 110. In some embodiments, the vent plate 160 may include steel, a steel alloy, aluminium, an aluminium alloy, nickel, or a nickel alloy. In some embodiments, the vent plate 160 may be electrically separated from the case 110 by being coupled to the upper end of the case 110 in a configuration in which the second gasket 116 (optional) is therebetween.

By being directly electrically connected to the negative electrode plate 122 of the electrode assembly 120 (e.g., the negative electrode uncoated portion 1221), the vent plate 160 may have a negative polarity. In some embodiments, the vent plate 160 may include a plurality of welding lines 166 to be directly electrically connected to the negative electrode uncoated portion 1221. In some embodiments, the welding lines 166 may be provided by a laser beam. In some embodiments, the laser beam is irradiated on the upper surface of the vent plate 160, and as a result, a portion of the vent plate 160 is melted and cooled, so that the portion of the vent plate 160 is mechanically/electrically coupled to the negative electrode uncoated portion 1221.

In one or more embodiments, the negative electrode current collector plate may be omitted. In the related art, the negative electrode uncoated portion 1221 of the electrode assembly 120 may be electrically connected to the negative electrode current collector plate, and the negative electrode current collector plate may be electrically connected to the vent plate 160 and/or the case 110. However, in the present disclosure, the negative electrode current collector plate may be omitted, and the negative electrode uncoated portion 1221 may be directly electrically connected to the lower surface of the vent plate 160. In some embodiments, at least a part or all of the negative electrode uncoated portion 1221 may be bent toward the center of the electrode assembly 120, and the thus bent region may come into direct contact with the lower surface of the vent plate 160. In one or more embodiments, after the vent plate 160 presses the negative electrode uncoated portion 1221, a laser beam may be irradiated into the vent plate 160, so that the welding lines 166 may be provided in the vent plate 160. The negative electrode uncoated portion 1221 of the electrode assembly 120 may be electrically/mechanically coupled to the vent plate 160 by the welding lines 166.

The vent plate 160 may include a first flat part 161 that is coupled to the case 110, an inclined part 163 that is inclined toward the electrode assembly 120 from the first flat part 161, and a second flat part 162 that extends flatly from the inclined part 163 toward the center of the vent plate 160. In some embodiment, the vent plate 160 may further include a concave part 164 that is concave toward the electrode assembly 120 at the center (or substantially at the center) of the second flat part 162.

The first flat part 161 may be between the beading part 113 and the crimping part 114 of the case 110 and coupled to the case 110. The first flat part 161 may be fixed between the beading part 113 and the crimping part 114 of the case 110. In some embodiments, in a configuration in which the second gasket 116 is above the beading part 113 of the case 110, the first flat part 161 may be seated on the second gasket 116. Thereafter, the crimping part 114 of the case 110 may be bent toward the inside of the vent plate 160 to press the second gasket 116, thereby coupling the vent plate 160 and the case 110 to each other. The second gasket 116 may be brought into close contact between the case 110 and the vent plate 160. In addition, the second gasket 116 may be brought into close contact with the beading part 113 and the inside of the crimping part 114. An end of the second gasket 116 located between the vent plate 160 and the crimping part 114 may extend more to the inside of the case 110 than an end of the crimping part 114 such that the end of the second gasket 116 is exposed to the outside. The end of the second gasket 116 located between the vent plate 160 and the beading part 113 may protrude more toward the inside of the case 110 than the beading part 113. The second gasket 116 may be made of a resin material such as polyethylene (PE), polypropylene (PP), or polyethylene terephthalate (PET).

The inclined part 163 of the vent plate 160 may be inclined downward from the first flat part 161 toward the second flat part 162. Therefore, the inclined part 163 places the second flat part 162 at a lower position than the first flat part 161. The location and height at which the inclined part 163 is formed may be changed according to the characteristics required for a battery. In some embodiments, the inclined part 163 may be located closer to the first flat part 161 than to the concave part 164. In some embodiments, the location of the inclined part 163 may be located closer to the concave part 164 than to the first flat part 161. In some embodiments, the lower end of the inclined part 163 may be at a higher position than the beading part 113. In some embodiments, the lower end of the inclined part 163 may overlap the beading part 113 or be positioned below the beading part 113.

The second flat part 162 may extend flatly from the inclined part 163 to the concave part 164. The second flat part 162 may include a plurality of vent grooves 165 that are configured to be opened at a set pressure (e.g., approximately 10±3 kgf/cm²). The thickness of the vent plate 160 at the vent grooves 165 may have a smaller thickness than other regions of the vent plate 160. The vent grooves 165 may be notches provided in a downward direction from the upper surface of the vent plate 160. In some embodiments, the vent grooves 165 may be oriented radially and/or circularly.

The second flat part 162 may include a plurality of welding lines 166 which electrically/mechanically connect the vent plate 160 and the negative electrode uncoated portion 1221 of the electrode assembly 120. In some embodiments, the plurality of welding lines 166 may be provided by a laser beam. In some embodiments, the welding lines 166 may be oriented radially.

The concave part 164 may be provided to be concave from the second flat part 162 toward the electrode assembly 120. The depth of the concave part 164 may be adjusted in various ways according to the cell characteristics. In some embodiments, the depth of the concave part 164 may be appropriately designed according to the breaking pressure required for the vent plate 160 and/or the internal volume required for a battery. In some embodiment, the lower end of concave part 164 may be higher or lower than the lower end of beading part 113.

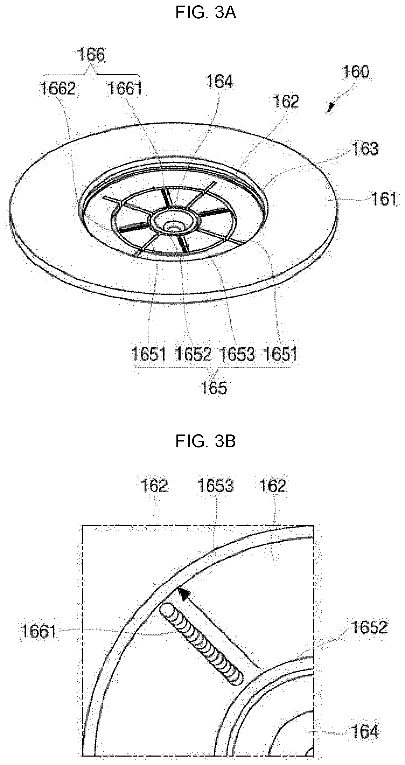

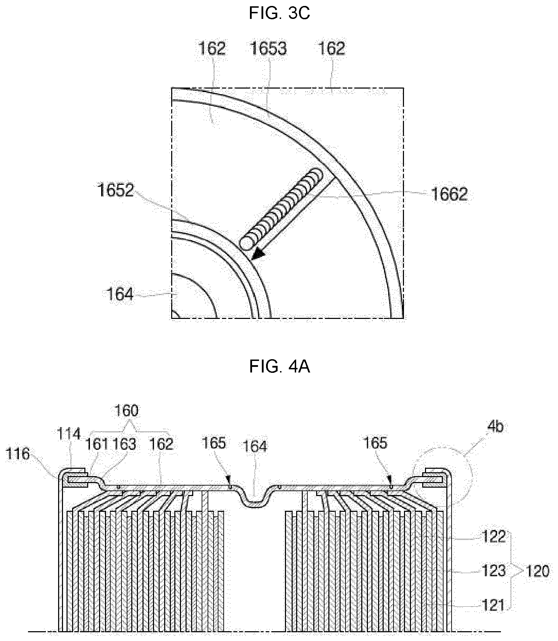

FIG. 3A is a perspective view illustrating the vent plate 160 in the embodiment of the cylindrical secondary battery 100 shown in FIG. 1, and FIGS. 3B and 3C are enlarged plan views illustrating welding lines 166 according to welding directions in one embodiment of the present disclosure. In FIGS. 3A, 3B, and 3C, a linear arrow indicates the direction of welding by a laser beam.

Referring to FIG. 3A, the plurality of welding lines 166 allow the vent plate 160 and the electrode assembly 120 (e.g., negative electrode uncoated portion) to be electrically/mechanically connected to each other. In some embodiment, the plurality of welding lines 166 may be provided in approximately radial linear lines from the center to the circumference of the vent plate 160. In one or more embodiments, the plurality of welding lines 166 may be provided in a substantially radial linear lines from the concave part 164 of the vent plate 160 toward the inclined part 163.

In some embodiments, the plurality of welding lines 166 may include one or more first welding lines 1661 provided by being welded from the center toward (e.g., to) the circumference of the vent plate 160 and one or more second welding lines 1662 provided by being welded from the circumference toward (e.g., to) the center of the vent plate 160. In one or more embodiments, the plurality of welding lines 166 may include one or more first welding lines 1661 provided by being welded in a direction from the concave part 164 to the inclined part 163 of the vent plate 160 and one or more second welding lines 1662 provided by being welded in a direction from the inclined part 163 to the concave part 164 of the vent plate 160.

In some embodiments, the first welding lines 1661 may be opposed to each other relative to the center of the vent plate 160 or the concave part 164 to be provided in a pair (e.g., the first welding lines 1661 may include a pair of diametrically opposed first welding lines 1661), and the second welding lines 1662 may also be opposed to each other relative to the center of the vent plate 160 or the concave part 164 to be provided in a pair (e.g., the second welding lines 1662 may include a pair of diametrically opposed second welding lines 1662). In some embodiments, the first welding lines 1661 and the second welding lines 1662 may be provided in a cross (+) shape. In some embodiments, the first welding lines 1661 and the second welding lines 1662 may intersect each other in a circumferential direction.

In addition, as described above, the vent plate 160 may include the first flat part 161, the inclined part 163, the second flat part 162, and the concave part 164, and the plurality of vent grooves 165 may be provided in the second flat part 162.

In some embodiments, the plurality of vent grooves 165 may include a plurality of linear first vent grooves 1651 radially extending from the center to the circumference of the vent plate 160. In one or more embodiments, the plurality of vent grooves 165 may include a plurality of linear first vent grooves 1651 radially spreading from the concave part 164 to the inclined part 163 of the vent plate 160.

In some embodiments, the plurality of vent grooves 165 may include an inner circular second vent groove 1652 closer to the center than to the circumference while forming a concentric circle with the center of the vent plate 160, and an outer circular second vent groove 1653 closer to the circumference than to the center while forming a concentric circle with the center of the vent plate 160. In one or more embodiments, the plurality of vent grooves 165 may include an inner circular second vent groove 1652 closer to the center than to the circumference while forming a concentric circle with the concave part 164 of the vent plate 160, and/or an outer circular second vent groove 1653 closer to the inclined 163 than to the concave part 164 while forming a concentric circle with the concave part 164 of the vent plate 160.

In some embodiments, the plurality of welding lines 166 may be provided between inner circular second vent groove 1652 and outer circular second vent groove 1653. In some embodiments, both ends of the welding lines 166 may be spaced apart from the inner circular second vent groove 1652 and the outer circular second vent groove 1653 by a gap.

In some embodiments, the plurality of linear first vent grooves 1651 may intersect the inner circular second vent groove 1652 and/or the outer circular second vent groove 1653. In some embodiments, the plurality of linear first vent grooves 1651 may pass through the outer circular second vent groove 1653 and extend to the circumference of the second flat part 162 (that is, to the inclined part 163).

Additionally, as shown in FIGS. 3B and 3C, the welding lines 166 may include different shapes according to different welding directions.

First, as shown in FIG. 3B, when welding by a laser beam that starts from the center (e.g., the inner circular second vent groove 1652) of the vent plate 160 and ends at the circumference (e.g., the outer circular second vent groove 1653), a "circular molten mark" (i.e., the end of the first welding line 1661) provided by the laser beam is left around the circumference of the vent plate 160 (i.e., the outer circular second vent groove 1653).

However, as shown in FIG. 3C, when welding by a laser beam starts from the circumference (e.g., the outer circular second vent groove 1653) of the vent plate 160 and ends at the center (the inner circular second vent groove 1652), a "circular molten mark" (i.e., the end of the second welding line 1662) provided by the laser beam is left around the center of the vent plate 160 (i.e., the inner circular second vent groove 1652).

As such, since the first welding line 1661 and the second welding line 1662 are provided in opposite directions, welding quality between the vent plate 160 and the electrode assembly (that is, the negative electrode uncoated portion 1221) can be further improved.

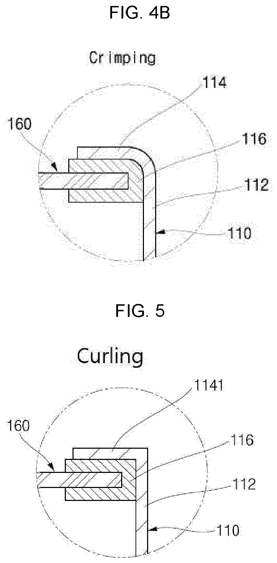

FIG. 4A is a partial cross-sectional view illustrating an coupling structure between the vent plate 160 and the case 110 by crimping, in an embodiment of the cylindrical secondary battery 100 according to the present disclosure, and FIG. 4B is a cross-sectional view illustrating an enlarged partial area of FIG. 4A.

As shown in FIGS. 4A and 4B, in the cylindrical secondary battery 100 according to one embodiment of the present disclosure, the vent plate 160 and the case 110 may be coupled to each other by a crimping part 114. In some embodiments, the vent plate 160 and the case 110 may be coupled to each other without a beading part (e.g., by the crimping part 114 only).

In some embodiments, after the vent plate 160 is electrically/mechanically connected to the electrode assembly 120, the electrode assembly 120 may be inserted into the case 110. In some embodiments, a gasket 116 may or may not be in the circumference of the vent plate 160. In some embodiments, the upper end of the case 110 is bent while having a curvature toward the inside of the vent plate 160, so that an upper-end region of the case 110 (e.g., the crimping part 114) may cover the circumference of the vent plate 160 while having a curvature. In some embodiments, the crimping part 114 may be formed by compression using a mold.

In some embodiments, the vent plate 160 may press the electrode assembly 120 by the crimping part 114 having a curvature. In some embodiments, after the vent plate 160 is electrically/mechanically coupled to the electrode assembly 120 (that is, after being laser-welded), the electrode assembly 120 may be inserted into the case 110. In some embodiments, after the electrode assembly 120 is inserted into the case 110, the vent plate 160 may be laser-welded to the electrode assembly 120. In some embodiments, after the vent plate 160 and the case 110 are coupled to each other by means of the crimping part 114, the vent plate 160 may be laser-welded to the electrode assembly 120. This process may be performed in the same manner or in a similar manner in all embodiments of the present disclosure, and may be variously changed according to the characteristics required of a battery.

FIG. 5 is a partial cross-sectional view illustrating a coupling structure between the vent plate 160 and the case 110 by curling, in the cylindrical secondary battery 100 according to the present disclosure.

As shown in FIG. 5, in the cylindrical secondary battery 100 according to one embodiment of the present disclosure, the vent plate 160 and the case 110 may be coupled to each other by means of a curling part 1141. In some embodiments, a gasket may or may not be between the vent plate 160 and the case 110. In some embodiments, an upper-end region of the case 110 is bent inward in the horizontal direction, and the bent region (that is, the curling part 1141) may press a circumferential region of the vent plate 160. In some embodiments, the curling part 1141 may be bent inward by rotating a roller. In some embodiments, the curvature of the curling part 1141 may be smaller than the crimping part 114 or may be almost non-existent.

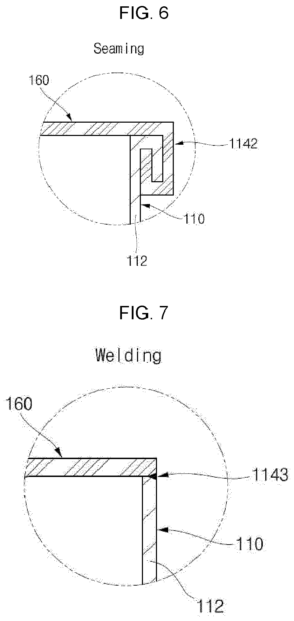

FIG. 6 is a partial cross-sectional view illustrating a coupling structure between the vent plate 160 and the case 110 by seaming, in the cylindrical secondary battery 100 according to one embodiment of the present disclosure.

As shown in FIG. 6, in the cylindrical secondary battery 100 according to one embodiment of the present disclosure, the vent plate 160 and the case 110 may be coupled to each other by means of a seaming part 1142. In some embodiments, a gasket may or may not be between the vent plate 160 and the case 110. In some embodiments, a seaming process may be performed in a configuration in which an upper-end region of the case 110 may extend outward in the horizontal direction and the circumferential region of the vent plate 160 is seated on the extending region.

In some embodiments, a region where the vent plate 160 and the case 110 are in contact with each other may be bent at least once by a seaming process to provide the seaming part 1142, and by this seaming part 1142, the vent plate 160 and the case 110 may be coupled to each other. In some embodiments, the circumferential end of the vent plate 160 may be sandwiched between bent regions of the case 110, or the circumferential end of the case 110 may be terminated by the circumferential end of the vent plate 160.

FIG. 7 is a partial cross-sectional view illustrating a coupling structure between the vent plate 160 and the case 100 by welding, in the cylindrical secondary battery 100 according to one embodiment of the present disclosure.

As shown in FIG. 7, in the cylindrical secondary battery 100 according to one embodiment of the present disclosure, the vent plate 160 and the case 110 may be coupled to each other by means of a welding part 1143.

In some embodiments, the welding part 1143 may be provided on a side portion of a boundary region between the vent plate 160 and the case 110 or on an upper side of the boundary region between the vent plate 160 and the case 110.

In some embodiments, the welding part 1143 may be provided by arc welding, atomic hydrogen welding, carbon arc welding, plasma arc welding, coated arc welding, submerged arc welding, metal inert gas (MIG) welding, electroslag welding, laser welding, electron beam welding, cold pressure welding, friction welding, explosion welding, ultrasonic welding, electric resistance welding, butt welding, upset welding, flash welding, or the like. In some embodiments, various welding methods described above may be used for electrical/mechanical coupling between the electrode assembly 120 and the vent plate 160.

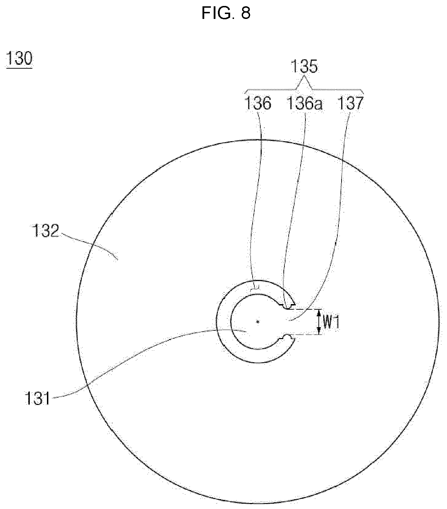

FIG. 8 is a plan view illustrating a positive current collector 130 in the cylindrical secondary battery 100 according to one embodiment of the present disclosure.

As shown in FIG. 8, a positive electrode current collector plate 130 may include a terminal connector part 131 and an electrode plate connector part 132. In some embodiments, the positive electrode current collector plate 130 may further include a fuse part 135. The terminal connector part 131 is located at the center of the positive electrode current collector plate 130 and may be provided in a substantially circular shape. The fastening part 152 of the rivet terminal 150 may be welded to the lower surface of the terminal connector part 131. In some embodiments, the area (or size) of the terminal connector part 131 may be larger than the area (or size) of the fastening part 152. In some embodiments, the terminal connector part 131 may be provided to have a larger thickness than the electrode plate connector part 132. Therefore, when the rivet terminal 150 is welded to the terminal connector part 131, it is possible to prevent (or at least mitigate against) the terminal connector part 131 from being deformed. The electrode plate connector part 132 is located outside the terminal connector part 131, and the positive electrode plate 121 of the electrode assembly 120 may be electrically connected. For example, the positive electrode uncoated portion of the positive electrode plate 121 protruding downward from the electrode assembly 120 may be welded to the upper surface of the electrode plate connector part 132. In some embodiments, the fuse part 135 may be provided between the terminal connector part 131 and the electrode plate connector part 132. The fuse part 135 may include a fuse hole 136, a connection part 137, and protrusions 136a protrude from both ends of the fuse hole 136 toward the connection part 137. When a short circuit or overcurrent occurs in the secondary battery 100, the connection part 137 may be melted or cut due to generated heat, and thus, the fuse part 135 may prevent current from flowing through the secondary battery 100. The fuse hole 136 is formed in a substantially 'C' shape along a portion of the outer periphery of the terminal connector part 131, and both ends of the fuse hole 136 may face each other. The fuse hole 136 may separate the terminal connector part 131 and the electrode plate connector part 132 from each other when a short circuit or overcurrent event occurs. That is, the terminal connector part 131 and the electrode plate connector part 132 may be spaced apart from each other by the fuse hole 136. The connection part 137 may connect the terminal connector part 131 and the electrode plate connector part 132 to each other. When a short circuit or overcurrent occurs in the secondary battery 100, the connection part 137 is melted and cut due to generated heat, which blocks current and thereby improves the safety of the secondary battery 100. A width W1 of the connection part 137 may refer to a length between one end and the other end of the fuse hole 136.

As described above, the present disclosure provides a cylindrical secondary battery capable of achieving high capacity according to an increased internal space of a case by incorporating a current collector (or current collector plate) and a vent plate, and achieving low costs by reducing material costs and processing costs.

The present disclosure provides a secondary battery having improved weldability between an electrode assembly and a vent plate by welding the electrode assembly and the vent plate to each other by using laser beams for electrical/mechanical coupling, and by including, on the vent plate, a welding line from a winding-leading end to a winding-terminating end, of the electrode assembly, and a welding line from the winding-terminating end to the winding-leading end, of the electrode assembly.

The present disclosure provides a secondary battery having improved sealing capacity of a case by coupling the case to a vent plate in a mechanical coupling structure, wherein, in the mechanical coupling structure, a crimping method, a curling method, and/or a welding method are utilized.

While the foregoing embodiments are only embodiments for carrying out the cylindrical secondary battery according to the present disclosure, which is not limited to the embodiment, it will be understood by a person skilled in the art that various changes in form and details may be made therein without departing from the scope of the present disclosure as defined by the following claims.

## Claims

1. A secondary battery comprising:
an electrode assembly comprising a first electrode plate, a separator, and a second electrode plate;
a case accommodating the electrode assembly;
a rivet terminal penetrating the case and electrically connected to the first electrode plate of the electrode assembly; and
a vent plate sealing the case and directly electrically connected to the second electrode plate of the electrode assembly.

2. The secondary battery as claimed in claim 1, wherein the vent plate further comprises a plurality of welding lines directly electrically connecting the vent plate to the second electrode plate.

3. The secondary battery as claimed in claim 2, wherein the plurality of welding lines include at least one first welding line welded from a center to a circumference of the vent plate and at least one second welding line welded from the circumference to the center of the vent plate.

4. The secondary battery as claimed in claim 2 or claim 3, wherein the plurality of welding lines radially extend from the center to the circumference of the vent plate.

5. The secondary battery as claimed in any one of claims 2 to 4, wherein the plurality of welding lines are provided by a laser beam.

6. The secondary battery as claimed in any one of claims 1 to 5, wherein the vent plate further comprises a plurality of vent grooves.

7. The secondary battery as claimed in claim 6, wherein the plurality of vent grooves comprise a plurality of linear first vent grooves radially extending from a center of the vent plate to a circumference of the vent plate.

8. The secondary battery as claimed in claim 6 or claim 7, wherein the plurality of vent grooves comprise an inner circular second vent groove closer to the center than to the circumference and forming a concentric circle with the center of the vent plate, and an outer circular second vent groove closer to the circumference than to the center and forming a concentric circle with the center of the vent plate.

9. The secondary battery as claimed in claim 8, wherein the plurality of welding lines is between the inner circular second vent groove and the outer circular second vent groove.

10. The secondary battery as claimed in claim 6, wherein the plurality of vent grooves comprises a plurality of linear first vent grooves radially extending from a center to a circumference of the vent plate, an inner circular second vent groove closer to the center than to the circumference and forming a concentric circle with the center of the vent plate, and an outer circular second vent groove closer to the circumference than to the center and forming a concentric circle with the center of the vent plate, wherein the plurality of welding lines are between the inner circular second vent groove and the outer circular second vent groove, optionally wherein the plurality of linear first vent grooves intersect the inner circular second vent groove and the outer circular second vent groove.

11. The secondary battery as claimed in any one of claims 1 to 10, wherein the vent plate comprises a first flat part coupled to the case, an inclined part inclined toward the electrode assembly from the first flat part, and a second flat part extending flatly from the inclined part toward a center of the vent plate.

12. The secondary battery as claimed in claim 11, wherein:
(i) the second flat part of the vent plate further comprises a plurality of welding lines directly electrically connecting the vent plate to the second electrode plate; and/or
(ii) the vent plate further comprises a concave part that is concave toward the electrode assembly at a center of the second flat part.

13. The secondary battery as claimed in any one of claims 1 to 12, wherein:
(i) the case and the vent plate are coupled to each other by a crimping part in the case;
(ii) the case and the vent plate are coupled to each other by a crimping part and a beading part in the case;
(iii) the case and the vent plate are coupled to each other by a curling part in the case;
(iv) the case and the vent plate are coupled to each other by a seaming part in the case and the vent plate; or
(v) the case and the vent plate are coupled to each other by welding lines in the case and the vent plate.

14. The secondary battery as claimed in any one of claims 1 to 13, further comprising a current collector plate between the electrode assembly and the case and comprising a terminal connector part to which the rivet terminal is connected, an electrode plate connector part to which the first electrode plate is connected, and a fuse part between the terminal connector part and the electrode plate connector part.

15. The secondary battery as claimed in claim 14, wherein the fuse part comprises:
a fuse hole along a portion of an outer periphery of the terminal connector part; and
a connection part electrically connecting the terminal connector part and the electrode plate connector part, optionally wherein the rivet terminal comprises a head positioned outside the case and a fastening part extending from a center of the head to the inside of the case and welded to the terminal connector part.
